# EUROPEAN PATENT APPLICATION

(11) **EP 0 848 533 A2**
(43) Date of publication of application: **17.06.1998**
(21) Application number: 97309708.2
(22) Date of filing: 02.12.1997
(51) Int. Cl.: H04M 1/57, H04M 1/66, H04M 1/72

(54) **Personal computer interactive phone (PCIP) system with audio caller ID announcing capability**

(30) Priority: 16.12.1996 US 767046
(71) Applicant: NCR International, Inc., Dayton, Ohio 45479 (US)
(72) Inventor: Peters, Daniel V., Lisle, IL 60532 (US)
(74) Representative: Irish, Vivien Elizabeth

(57) **Abstract**

An integrated computer-telephone system includes a personal computer (141), a PC add-in board (142), a plurality of telephone set adapters (102A.....102N), and a plurality of telephone sets (104A.....104N). Each of the telephone sets is connected, through a respective one of the telephone set adapters, to a telephone network (106) via a telephone line (101), and to audio circuits at the PC via high frequency audio communication channels (316). The personal computer controls the telephone set adapters via a high frequency control channel (318). The audio communication channels and control channel do not interfere with regular signal transmission between the telephone sets and the telephone network. The add-in board includes circuits (364) that can detect Caller ID information associated with incoming telephone calls. For specific, pre-setup callers, the PC can look up the associated entry (614) in memory (506) and cause a unique announcement to be broadcast to speakers at pre-selected adapter boxes. The user of this system can know who the caller is without going to the telephone. New callers can be added to the list of known callers. After a call is terminated, the user picks up the telephone which establishes a communication channel to the PC. The user speaks a command and a message to be associated with this caller. This message will be played the next time that caller calls.

## Description

The present invention generally relates to a telephone communication system, and in particular, to an in-home (a small office) telephone communication system utilizing the capabilities in existing telephone equipment and existing phone wiring with the addition of a control computer.

Increasingly, many homes may have one or more telephone wires and a modern PC with advanced features. With increasing performance needs and expectations on home telephone system, more and more consumers are demanding that the home telephone system have more intelligence and processing capabilities at an affordable price. Thus, applicant has realized there is a large market potential to use modern PC's processing power to provide home telephone system with advanced home telephony features, including:
(1) caller ID announcement based on caller ID record,
(2) voice activated auto-dial,
(3) PC resident message center access from any PCIP equipped phone,
(4) routing of incoming calls to specific phones in the home,
(5) in-house intercom with no additional wiring of the home,
(6) screening of incoming messages from any PCIP equipped phone,
(7) home convenience package including list maker and scheduler, and
(8) speech recognition by using the PCIP system.

Applicant has also realized that the feasibility to achieve such market potential greatly relies on an effective design of an integrated computer-telephone system:
(1) that has a low cost,
(2) that is flexible to form a specific telephone system for a household,
(3) that is adaptable to existing telecommunication technology,
(4) that is adaptable to consumer's existing telephone equipment and house wiring,
(5) that is simple to install, and
(6) that does not interfere with regular operation of existing home telephone systems.

The present application specifically relates to audible caller identification (Caller ID) broadcasting feature which is intended to be an important aspect of the PCIP system, but which could also be a standalone product. The other features of the present invention are described in NCR's copending applications Nos.[ ], [ ] and [ ]filed on even date. It is known that existing technology is able to provide visual display for callers' identifications to consumers' houses. However this is of limited use as a user has to be able to see the display to benefit from the facility. There is a need for a more flexible technique.

According to the present invention there is provided apparatus for responding to a caller identification carried in an incoming call to a communication device characterised in that the apparatus comprises a processor logic capable of associating a message with the identification and an audio generating arrangement capable of responding to said message and audibly presenting said message.

The audible Caller ID broadcasting feature in the present invention has the following advantages over the existing technology:
1. Audible broadcast of the Caller ID is better than the typical display of Caller ID, because the user can hear the information wherever he/she is in the room rather than moving to the Caller ID display area to see the information.
2. Caller ID information can be available throughout the house with only one Caller ID recovery circuit required at the PC. This assumes the PCIP system is deployed throughout the house. The customer does not need to purchase a separate box having a Caller ID recovery circuit for each room.
3. The PCIP system can route incoming calls to only selected PCIPA equipped phones or to all PCIPA equipped phones or to no PCIPA equipped phones depending on the Caller ID information and a database containing the user's preference. For example, the phone in the parents room does not need to ring for callers who are typically calling to talk to the children.
4. The PCIP system can generate distinctive ringing tones depending on the Caller ID information and a database containing the user's preference. For example, an incoming call from the boss may have a distinctive, higher volume three burst ring.

Therefore, there is a need to provide an integrated computer-telephone system that provides audible Caller ID broadcasting feature with feasibility, flexibility and low cost.

There is another need to provide an integrated computer-telephone system that provides audible Caller ID broadcasting feature with adaptability to consumers' existing home telephone equipment and wiring.

There is still another need to provide an integrated computer-telephone system that provides audible Caller ID broadcasting without interfering with regular operation of existing telephone system. The PCIP system allows a mix of PCIP-connected telephones and conventionally connected telephones.

In another aspect the present invention provides an apparatus for caller identification characterised by generating a message for a caller identification carried in an incoming call, and for sending the message to a communication device, a unique device identification being assigned to the communication device, the apparatus comprising:
a detector circuit to detect the caller identification carried in the incoming call;
a processor logic to select a message for the caller identification and to generate a device identification associated with the communication device; and
a transmitter circuit to send said selected message, together with said device identification, to the communication device.

In a further aspect the present invention provides an apparatus for caller identification from identification carried in an incoming call characterised by audibly presenting a message to a communication device when coupled thereto, a unique device identification being assigned to the communication device, the apparatus comprising:
a receiver circuit capable of receiving a message containing a device identification;
a processor logic capable of determining whether said received device identification matches the device identification assigned to the communication device; and
an audio generator circuit capable of audibly presenting the message if said received device identification matches the device identification assigned to the communication device.

The present invention also provides respective methods and systems corresponding to the aspects mentioned above.

The invention will now be described by way of example with reference to the following drawings, in which:
Figure 1 is a block diagram of a PC interactive phone (PCIP) system, in accordance with the present invention;
Figure 2 shows house wiring of a telephone line and installation scheme for the PC interactive phone (PCIP) system shown in figure 1, in accordance with the present invention;
Figure 3 (including 3A and 3B) shows the PC interactive phone (PCIP) system of figure 1 in greater detail, in accordance with the present invention;
Figure 4 shows the user panel of figure 3 in greater detail;
Figure 5 shows a PC computer that can be used to control the operation of the PCIP system of figure 1, in accordance with the present invention;
Figure 6 shows the programs stored in memory storage and disk storage in figure 5;
Figure 7 shows a flowchart illustrating the steps for performing Caller ID broadcasting operation, which provides a mechanism of obtaining, routing, and broadcasting Caller ID announcement information, using the PC and the PCIP equipment, in accordance with the present invention; and
Figure 8 shows a flowchart illustrating the steps for a user to conveniently store a new entry into the Caller ID database, in accordance with the present invention.

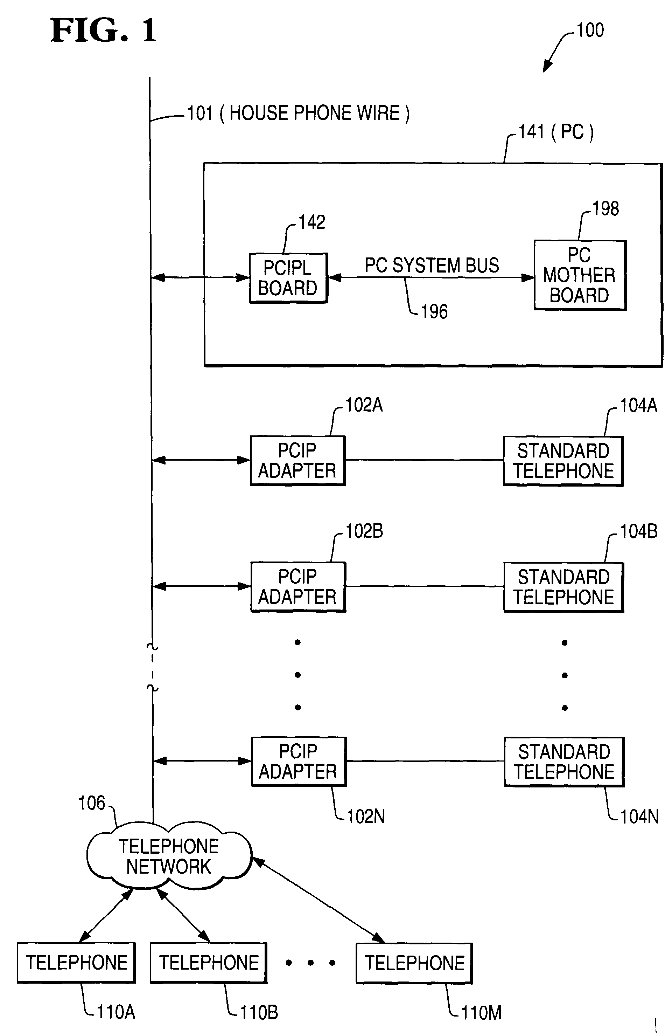

Referring to figure 1, there is shown a block diagram of a PC interactive phone (PCIP) system, in accordance with the present invention.

The PC interactive phone system includes a house telephone line 101, a PC 141, a plurality of telephone sets (identified as 104A, 104B, ..., 104N), and a plurality of PCIP adapter (identified as 102A, 102B, ..., 102N). Each of the telephone sets is coupled to its respective PCIP adapter (PCIPA). These telephone sets can be standard ones without any advanced features. Via telephone network 106, each of telephone sets 104A, 104B, ..., 104N can communicate with telephone sets 110A, 110B, ..., or 110M.

As shown in figure 1, PC 141 includes a PC mother board 198 and an add-in PCIP link (PCIPL) board 142. Other detailed aspects of a typical PC are not described here because they are known to the people in the art. PCIPL board 142 is coupled to PC mother board 198 via PC system bus 196. An example of a typical modern system bus is the PCI local bus. The PCIPL board and plurality of PCIP adapters are coupled to house telephone line 101.

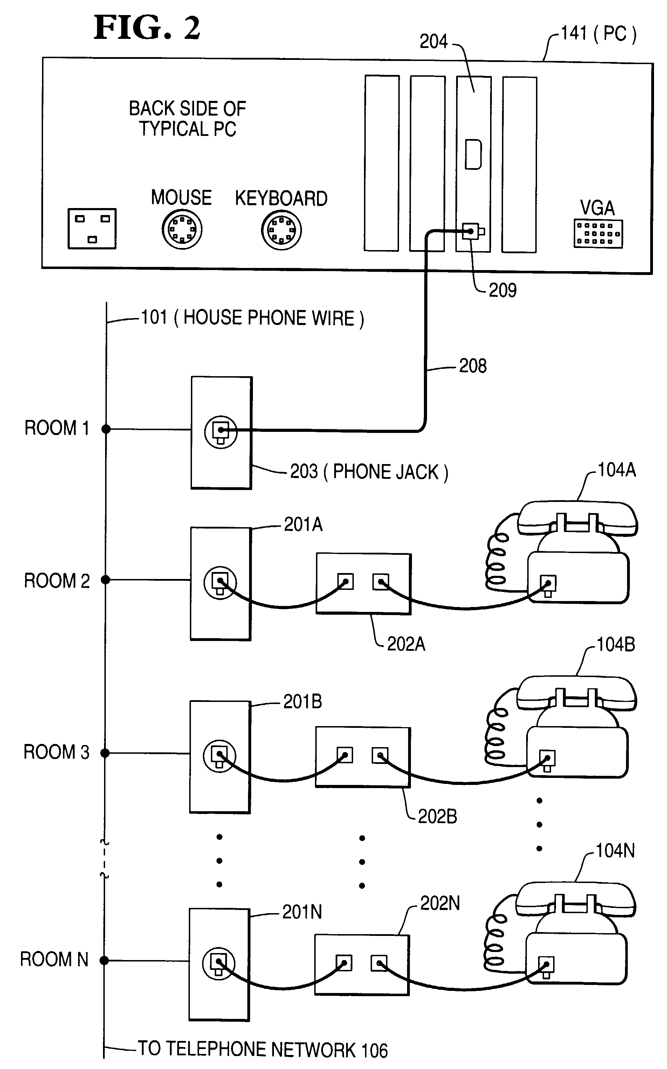

Referring to figure 2, there is shown house wiring of telephone line 101 and installation scheme for the PC interactive phone (PCIP) system shown in figure 1, in accordance with the present invention.

As shown in figure 2, PC 141 has a slot 204, generally allowing access for miscellaneous PC add-in boards, into which PCIPL board 142 is inserted. Telephone line 101 is wired into rooms 1-N, where telephone jacks 203, 201A, 201B, ..., 201N are installed respectively.

Via connector 209 and a connectorized telephone wire 208, PCIPL board 142 is coupled to telephone jack 203.

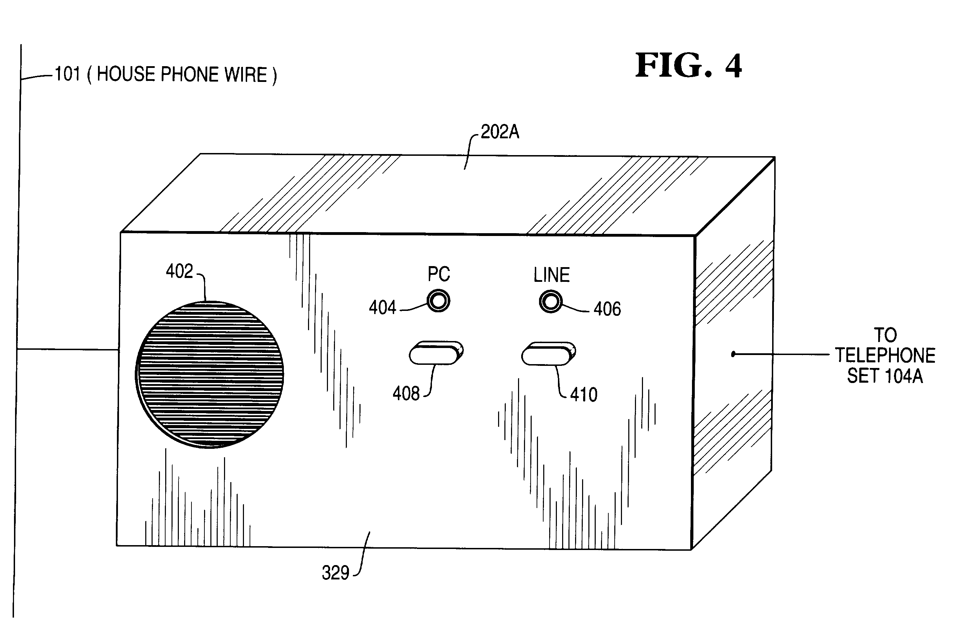

A plurality of adapter boxes (202A, 202B, ..., 202N) are coupled to telephone jacks 201A, 201B, ..., 201N, respectively. The telephone sets (104A, 104B, ..., 104N) are coupled to adapter boxes 202A, 202B, ..., 202N, respectively. Installed within adapter boxes 202A, 202B, ..., 202N are PCIP adapters 102A, 102B, ..., 102N, respectively. Each of the adapter boxes has a user panel which is depicted in figure 4 in greater detail.

To users, the system consists of just a few elements, some of which they would already have. Figure 2 shows how simply these elements are interconnected.

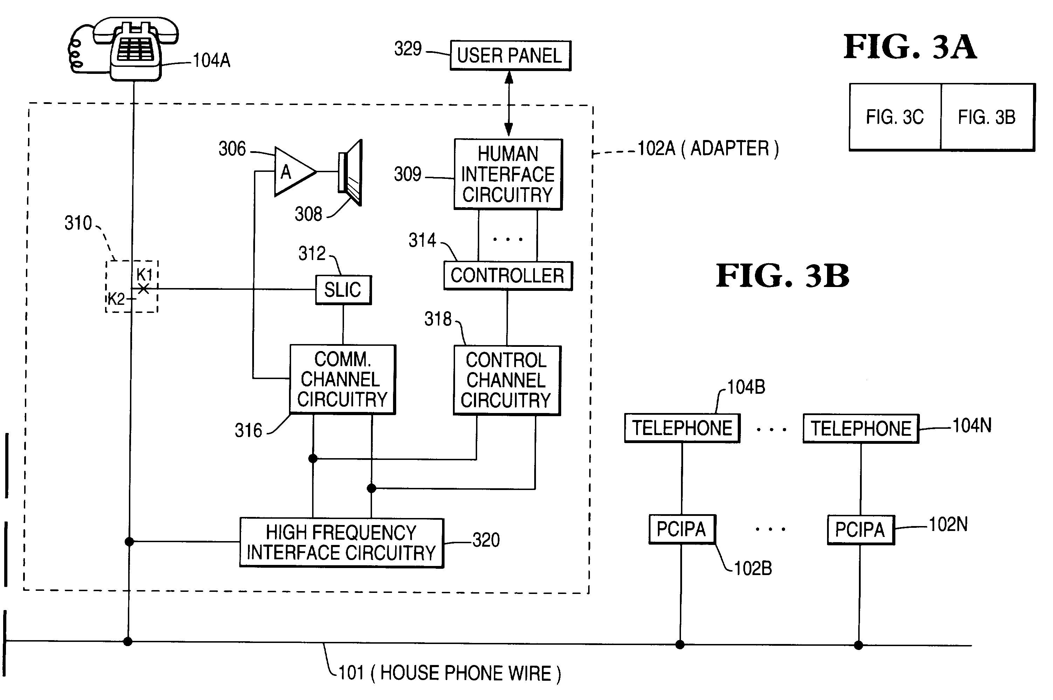

Referring to figure 3A (including 3B and 3C), there is shown an embodiment of the PC interactive phone (PCIP) system of figure 1 in greater detail, in accordance with the present invention.

Depicted in figure 3B as a representative of the pluralities of PCIP adapters (102A, 102B, ..., 102N), PCIP adapter 102A includes an amplifier 306, a speaker 308, a human interface circuitry 309, a relay 310, a subscriber loop interface (SLIC) 312, a controller 314, a communication channel circuitry 316, a control channel circuitry 318, and a high frequency interface circuitry 320. Coupled to human interface circuitry 309 is a user panel 329.

Speaker 308, coupled to communication channel circuitry 316 via amplifier 106, is able to project audio to PCIP adapter locations in the home as needed by the PCIP system.

SLIC 312, coupled between communications channel circuitry 316 and telephone 104A via K1 switch located within relay 310, is able to power telephone set 104A, to detect off-hook condition for telephone set 104A, to adjust the proper bias and amplitude to send audio signal to and receive audio signal from telephone set 104A, to adjust the proper bias and amplitude to send audio signal to and receive audio signal from the communications channel circuitry 316, and to convert a 4-wire-send-and-receive signaling arrangement on the communications channel side to a 2-wire-send-and-receive signaling arrangement that is appropriate to a telephone set. The off-hook detect capability within the SLIC is used by the PCIP system to initiate a "listen" response whenever a telephone handset gets picked up. Modern SLIC circuits are highly integrated devices that can be purchased from a number of suppliers.

Relay 310 is able to connect telephone 104A either to the PCIPA circuits, or to the telephone line by bypassing adapter 102A.

Human interface circuitry 309, coupled to controller 314, is able to generate currents to light the LEDs on user panel 329 in response to control signals from controller 314, and to generate service request signals to controller 314 in response to activations of the function buttons on user panel 329.

In adapter 102A, as an embodiment, communication channel circuitry 316, coupled to SLIC 312, can include two high frequency communication channels: a high frequency transmitter and a high frequency receiver. The high frequency transmitter combines low frequency audio from SLIC 312 with a high frequency carrier that can be coupled onto the home telephone wires in a non-interfering manner using the high frequency interface circuitry 320. The high frequency receiver recovers low frequency audio from a high frequency carrier on the house telephone wires and sends it either to SLIC 312 or to speaker 306 and amplifier 308, depending on control signals communicated through the controller 314. The two high frequency communication channels are mainly used as a full duplex audio (e.g., simultaneous audio transmission and reception) channel to another adapter, or to PC 141 (via the two communication channels located within PCIPL board 142). Depending on the various operating modes of the PCIP system, these two frequencies are re-configurable to the either transmitter or receiver functions under control of PCIPA controller 314.

Control channel circuitry 318 can encode and decode binary sequences using a third high frequency carrier (distinct from the two communication channels described in the previous paragraph). The control channel circuit is connected to the controller 314 which facilitates a multi-point network using a single carrier frequency. Controller 314 has a networking port capable of transmitting and receiving Manchester encoded digital information, which eliminates the need for a separate clock signal. Controller 314 also uses a collision sensing and back-off algorithm that resolves contention for the network. The control channel frequency can be coupled onto the house telephone wires in a non-interfering manner using high frequency interface circuitry 320. The encode side of control channel circuit 318 converts a binary "1" and "0" sequence from the controller 314 to a "carrier on" and "carrier off" sequence. The decode side of control channel 318 circuit converts a "carrier on" and "carrier off" sequence to a binary "1" and "0" sequence to be sent to the controller 314.

High frequency interface circuitry 320, which connects communication channel circuitry 316 and control channel circuitry 318 to the telephone line, is able to couple high frequency carrier from circuitries 316 and 318 to telephone line 101, without interfering the normal audio band signal transmission on the telephone line. High frequency interface circuitry 320 can also receive high frequency signals from the telephone line.

Controller 314 is specialized for implementation of distributed sense and control networks. It includes a networking port, a configurable input/output port, and hardware and firmware that allow execution of simple programs for sense and control and communications protocols. The input/output port provides access to human interface circuitry 309 and it controls various communications path options within the PCIPA circuit. For example, the input/output port is able to control the states of relay 310 (energized or un-energized), to generate signals to light the LEDs on user panel 329, to detect a button activation on user panel 329, to monitor the off-hook detect signal from the SLIC, and to switch the communication channel receiver output between speaker amplifier 306 and SLIC 312. The networking port that is integrated into controller 314 allows it to send and receive control commands from PC 141, for example, to send a service request to PC 141 after a specific button on user panel 329 has been activated. Specifically, the controller networks with the PC and other PCIPA controllers using data packets across the control channel. The Manchester encode and decode circuits that generate and sense the "1" and "0" bits are also integrated into the controller. Controller 314 also has a collision detect and back-off algorithm that resolves contention and allows multi-node access to the carrier. The specific device that currently suits this application is a Lon Works Neuron chip, MC143120 available from Motorola and Toshiba.

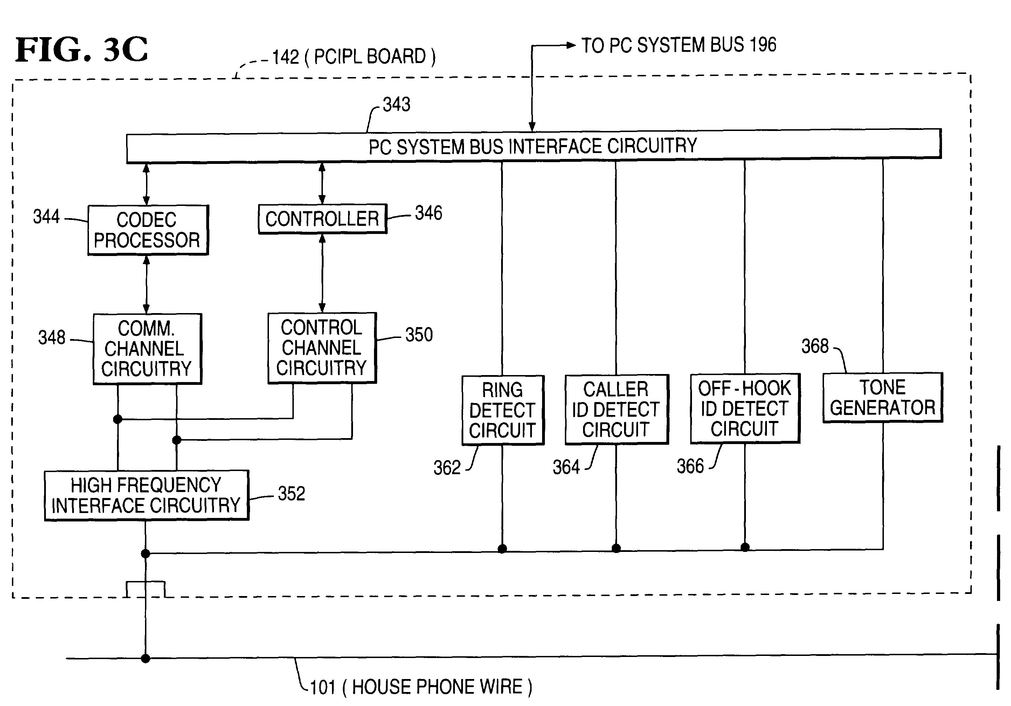

As shown in figure 3C, PCIPL board 142 includes a PC system bus interface circuitry 343, a CODEC (coder/decoder) processor 344, a controller 346, a communication channel circuitry 348, a control channel circuitry 350, a high frequency interface circuitry 352, a ring detect circuit 362, a Caller ID detect circuitry 364, an off-hook detect circuit 366, and tone generator 368.

PC system bus interface circuitry 343, coupled to PC system bus 196, is able to transmit signals between PC system bus 196 and the other circuitries on PCIPL board 142.

CODEC processor 344, coupled to PC system bus interface circuitry 343, is able to convert digitally encoded audio from PC system bus 196 to analog audio and send the converted digital audio to communication channel circuitry 348. It is also able to convert analog audio from communication channel circuitry 348 to digital audio and send the converted analog audio to PC 141.

Controller 346 has similar structure and function as controller 314 described for PCIP adapter 102A. It is specialized for implementation of distributed sense and control networks. It includes a networking port, a configurable input/output port, and hardware and firmware that allow execution of simple programs for sense and control and communications protocols. The input/output port in this case connects to PC system bus interface circuit 343 and provides a parallel port for communicating with the PC circuit. The controller 346 is coupled between PC system bus interface circuitry 343 and control channel circuitry 350, and is thus able to provide network access for the PC to generate control commands to, and interpret service requests and operational reports from, the adapters (102A, 102B, ..., 102N).

On PCIPL board 142, communication channel circuitry 348 has two high frequency communication channels, which are mainly used to flexibly establish full duplex audio channels between CODEC processor 344 and the PCIP adapters (102A, 102B, ..., 102N). Only one PCIP adapter will be allowed to transmit on either of the two communication channels at any time as controlled by PCIP control program 602. The function and structure of communication channel circuitry 348 are similar to those of communication channel 316 in the above-described PCIP adapter 102A.

Control channel circuitry 350 has one channel, which is mainly used to send control commands to, and receive service requests and operational reports from, the adapters (102A, 102B, ..., 102N). The function and structure of control channel circuitry 350 are similar to those of control channel circuitry 318 in the above-described PCIP adapter 102A.

High frequency interface circuitry 352, which connects communication channel circuitry 348 and control channel circuitry 350 to telephone line 101, is able to couple the high frequency carrier from circuitries 348 and 350 to the telephone line, without interfering with the normal audio band signal transmission on the telephone line. High frequency interface circuitry 352 can also receive high frequency signals from the telephone line.

Ring detect circuit 362 is able to detect ring currents on the telephone line.

Caller ID detect circuit 364 is able to detect caller's identification information (minimally, a caller's telephone number). This information is carried between first and second ring currents of an incoming call when caller ID service has been purchased from the local phone company.

Off-hook detect circuit 366 is able to detect a change in line impedance associated with off-hook condition. Three examples of off-hook condition are:
1. any of the non-PCIP equipped telephones connected to the telephone line has the handset lifted,
2. any of the PCIP equipped telephones has the handset lifted and the relay 310 has the phone connected to the house phone wires, or
3. any other equipment on the phone line such as a FAX or answering machine "picks up" a call.

Tone generator 368 is to able to convert a telephone number to be dialed from a computer based representation, such as binary, into DTMF (dual tone multifrequency) tones that can be superimposed onto the telephone line to effect autodialing. This circuit is related to PCIP capabilities other than Broadcast Caller ID and will not be discussed further here.

Ring detect circuit 362, Caller ID detect circuit 364, Off-hook detect circuit 366 are known to the person skilled in the art. Thus, they will not be described in greater detail. The functions of CODEC processor 344 and tone generator 368 can be flexibly programmed into various digital signal processors (DSPs) available in the industry, an example of which is DSP 1634 processor made by AT&T.

It should be noted that, in the embodiment shown in figure 3A, the three frequencies that are used to implement the communication and control channels in the PCIP system are out of the audio voice band and are in compliance with FCC rules, such that, the signaling of these three channels does not interface with normal communication and signaling on a telephone network, even when PCIP and normal telephone activities are in progress simultaneously.

Preferably, in the embodiment shown in figure 3A, 312.5 KHz and 357.1 KHz are used for two communication channels and 416.7 KHz for one control channel. These three specific frequencies are chosen because they are between 540 KHz (the bottom of the AM broadcast band) and 270 KHz (the lowest frequency that can be used for compliance to part 68 Federal Communication Commission). These three frequencies are also multiples of 10 MHz, which makes them easy to generate without RC or L tunables.

In the embodiment as shown in figure 3A, a communication channel between adapter 102A and PCIPL board 142 is formed by: PCIPA communication channel circuitry 316, PCIPA high frequency interface circuitry 320, house phone wire 101, PCIPL high frequency interface circuitry 352, PCIPL communication channel circuitry 348. A control channel between adapter 102A and PCIPL board 142 is formed by: PCIPA control channel circuitry 318, PCIPA high frequency interface circuitry 320, house phone wire 101, PCIPL high frequency interface circuitry 352, PCIPL control channel circuitry 350.

Unlike the conventional telephone communication system, the present invention uses two communication channels to achieve full duplex audio. In the conventional telephone communication, one set of wires achieves full duplex audio by using a hybrid transformer that separates transmitting from receiving in a telephone set. However, the method used in the conventional telephone communication is not feasible when audio is modulated in an out of voice band carrier, because, if both ends of a communication channel used the same carrier, the result would be scrambled unrecoverable carrier.

In addition, unlike the conventional telephone communication system where a telephone office is usually either in audio transmission mode or in controlling mode (such as on-hook or off-hook signaling), the features provided by the adapters and PCIPL board 342 sometimes need to process audio transmission and control signals at the same time when multiple telephone sets connected to the telephone line are in use at the same time. Thus, in adapter 102A and PCIPL board 142, the communication channels are separated from the control channel.

In the embodiment shown in figure 3A, the existing house telephone wiring is used as transmission medium for the three high frequency channels between the adapter 102A and PCIPL board 142. However, other transmission media can be used to implement these three channels, such as wireless or power line carrier.

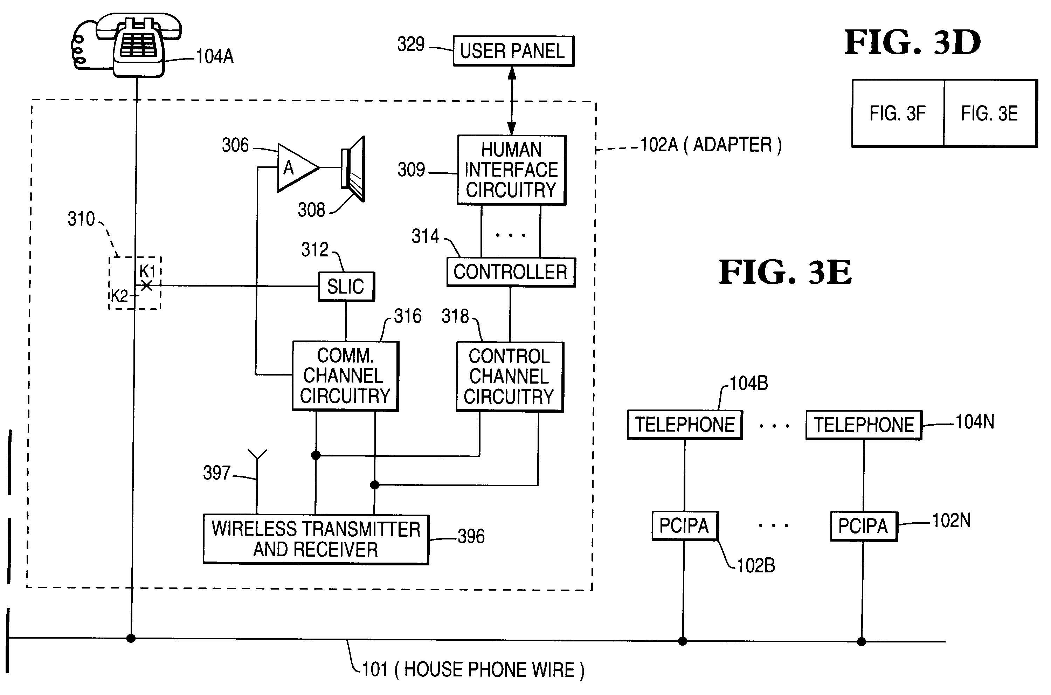

Referring to figure 3D (including 3E and 3F), there is shown another embodiment of the PC interactive phone (PCIP) system of figure 1 in greater detail, in accordance with the present invention.

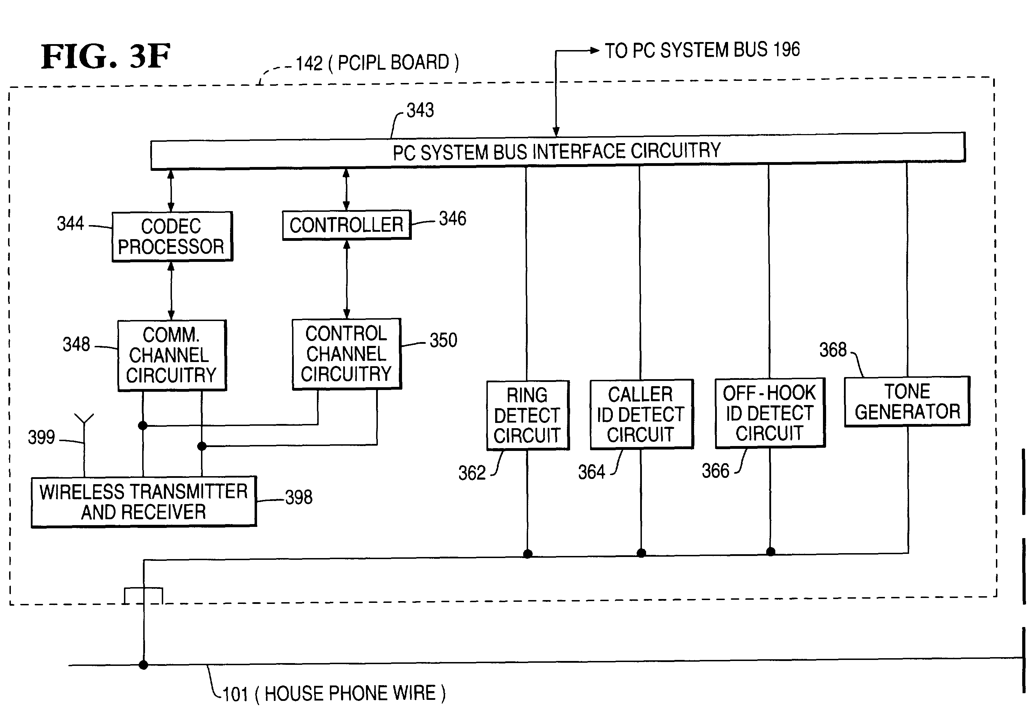

Figure 3E has a similar structure to that shown in figure 3B, except that in figure 3E high frequency interface circuitry 320 of figure 3B is replaced by wireless communication interface circuitry 396, which includes an antenna 397. Figure 3F has a similar structure to that shown in figure 3C, except that in figure 3F high frequency interface circuitry 352 of figure 3B is replaced by wireless communication interface circuitry 398, which includes an antenna 399. Thus, in figure 3D, only PCIPA wireless communication interface circuitry 396 and PCIPL wireless communication interface circuitry 398 will be further described.

Wireless communication interface circuitry 396 (or 398) is able to implement a duplex communication link using two frequencies between any two PCIPAs or between one PCIPA and the PCIPL, and is able to implement a multipoint control channel on a third frequency. The communication link technology is common in the industry, as in cordless phone technology. However, specific control must be exerted to prevent more than one transmitter at a time on one frequency. The multi-point control link is implemented as a single frequency that is modulated "on" or "off" for Manchester encoded signaling by any of the PCIPL or PCIPA circuits. Multi-point networking is possible because each PCIPL and PCIPA circuit implements a collision detect and back-off algorithm as in the wired approach.

In the embodiment as shown in figure 3D, the communication between adapter 102A and PCIPL board 142 is through wireless carrier, instead of house telephone line 101. In figure 3D, a communication channel between adapter 102A and PCIPL board 142 is formed by: PCIPA communication channel circuitry 316, PCIPA wireless communication interface circuitry 396, PCIPL wireless communication interface circuitry 398, and PCIPL communication channel circuitry 348. A control channel between adapter 102A and PCIPL board 142 is formed by: PCIPA control channel circuitry 318, PCIPA wireless communication interface circuitry 396, PCIPL wireless communication interface circuitry 398, and PCIPL control channel circuitry 350. Like PCIP adapter 102A, each of the other PCIP adapters (102B, ..., 102N) also has a communication channel and a control channel to PCIPL board 142.

Referring to figure 4, there is shown user panel 329 (which is mounted on the front of adapter box 202A) in greater detail, in accordance with the present invention.

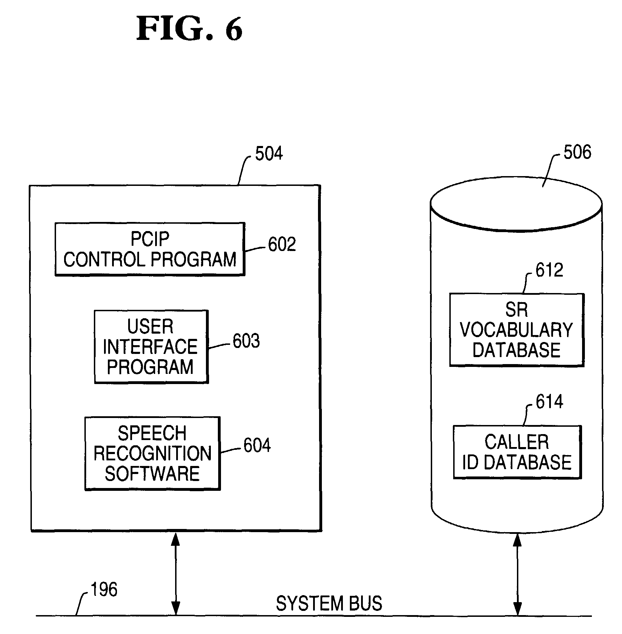

As shown in figure 4, user panel 329 includes a speaker opening 402, two LEDs (404, 406), and two buttons (408, 410). LED 404, which is associated with the label "PC" and button 408, indicates whether a communications link has been established between the attached telephone set and PCIP speech recognition software 604 (see figure 6) at PC 141, as would be the typical case after pressing button 408. LED 406, which is associated with the label "LINE" and button 410, indicates whether telephone set 104A is directly connected to telephone line 101, as would be the typical case after pressing button 410.

In the idle state, PC 141 is on; PCIPL board 142 is active; and relay 310 connects telephone set 104A to SLIC 312; so that when picking up the handset of telephone set 104A, LED 404 typically turns on and a user can speak service request to PC 141 immediately without speaking over a dialtone sound. By pressing button 410, the user can over-ride the default condition, which causes relay 310 to connect telephone set 104A to the telephone line directly and enables the user to dial a telephone number manually. Relay 310 is controlled by PCIP control program 602 (see figure 6) and the firmware in controller 314, which are responsive to button pushes, off-hook conditions, system state, and resource availability, such as availability of the audio communication channels. Some functions of PCIP control program 602 are distributed such that some control is in the various PCIP adapters (e.g. 102A-N). If PC 141 is turned off or otherwise not responding, controller 314 will control relay 310 to directly connect telephone set 104A to telephone line 101.

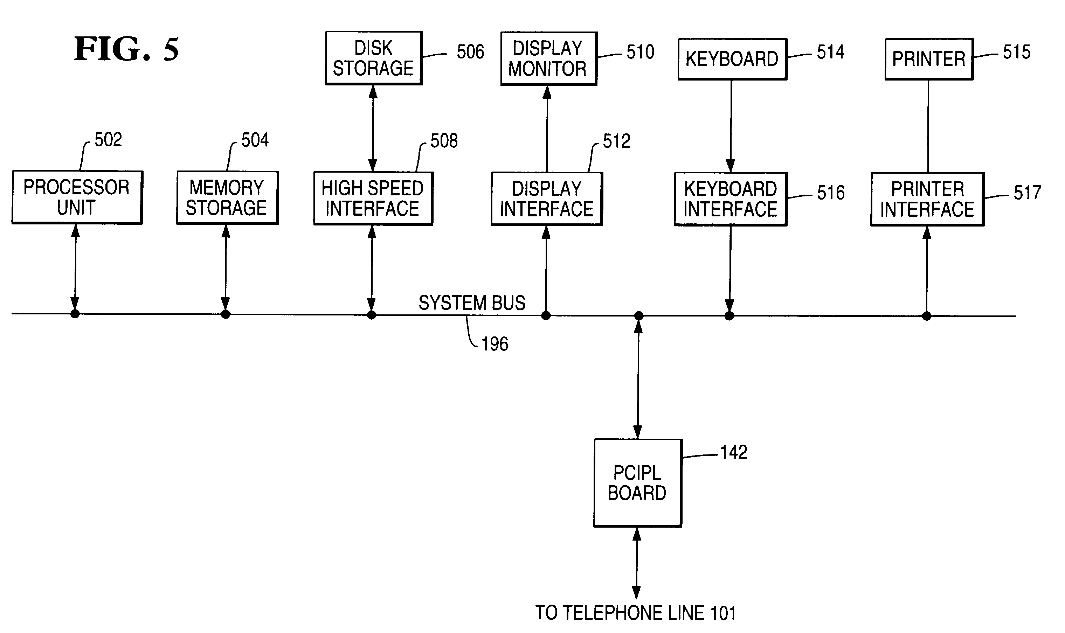

Referring to figure 5, there is shown PC computer 141 of figure 1 in greater detail, in accordance with the present invention.

As shown in figure 5, PC 141 includes a system bus 196, a processor unit 502, a memory storage 504, a disk storage 506, a high speed interface 508, a display monitor 510, a display interface 512, a keyboard 514, a keyboard interface 516, a printer 515, and a printer interface 517.

Memory storage 504, coupled to the system bus, is able to store programs that consist of instructions and data.

Disk storage 506, coupled to the system bus via high speed interface 508, is also able to store programs. However, disk storage 506 has larger memory size than memory storage 504, while memory storage 504 has faster access speed than disk storage 506. The programs stored in disk storage 506 can be down loaded to memory storage 504.

Processor unit 502, coupled to the system bus, has the access to both memory storage 504 and disk storage 506. To perform a specific task, the processor unit is able to execute the programs stored in memory storage 504. The processor unit is also able to control the over all operation of the PC computer.

Display monitor 510, coupled to the bus via display interface 512, is able to provide visual interface between a user and the PC computer.

Keyboard 514, coupled to the system bus via a keyboard interface 516, is able to provide alphabetical and numerical input to the PC computer system.

Printer 515, coupled the system bus via printer interface 517, is able to print out results.

Referring to figure 6, there is shown the executable programs stored in memory storage 504 during execution and the database files maintained in disk storage 506.

As shown in figure 6, executable programs stored in memory storage 504 include: PCIP control program 602, user interface program 603, and speech recognition software 604. Database files stored in disk storage 506 include: speech recognition (SR) vocabulary database 612, and Caller ID Database 614.

PCIP control program 612 is able to maintain state information for the system and orchestrate responses to various stimulus. Stimulus's include button pushes, off-hooks, ring detect, etc. Responses include initiating database lookups, sending out control commands for establishing communication connections, etc. For example, if a PCIP adapter connected telephone has an off hook condition, control program 602 will be informed and it will send out commands on the control channel which will establish a communication channel. Furthermore, the control program will initiate speech recognition software 604 to "listen" to the appropriate communication channel. Specific examples are provided in the discussion of the flowcharts below.

Speech recognition software 604 is widely available. The PCIP system in the present invention does not require a particularly sophisticated capability. An example of an ASR application is WILDFIRE (call 800.WILDFIR for a practical demonstration and additional information). Examples of how speech recognition software 604 is used in this system are provided in the discussion of the flowcharts below.

SR Vocabulary database 612 contains the digital representation of audio clips (in this case, spoken words relating to commands and names) that can be interpreted by speech recognition software 604. These digital representations are frequently referred to as wavefiles. The use of wavefile formats is common in the industry.

User interface program 603 provides a human interface via PC's display monitor 510, keyboard 514 and mouse 515. It allows a user to install, configure, and customize his/her PCIP system. This is a typical capability for PC add-in software and hardware.

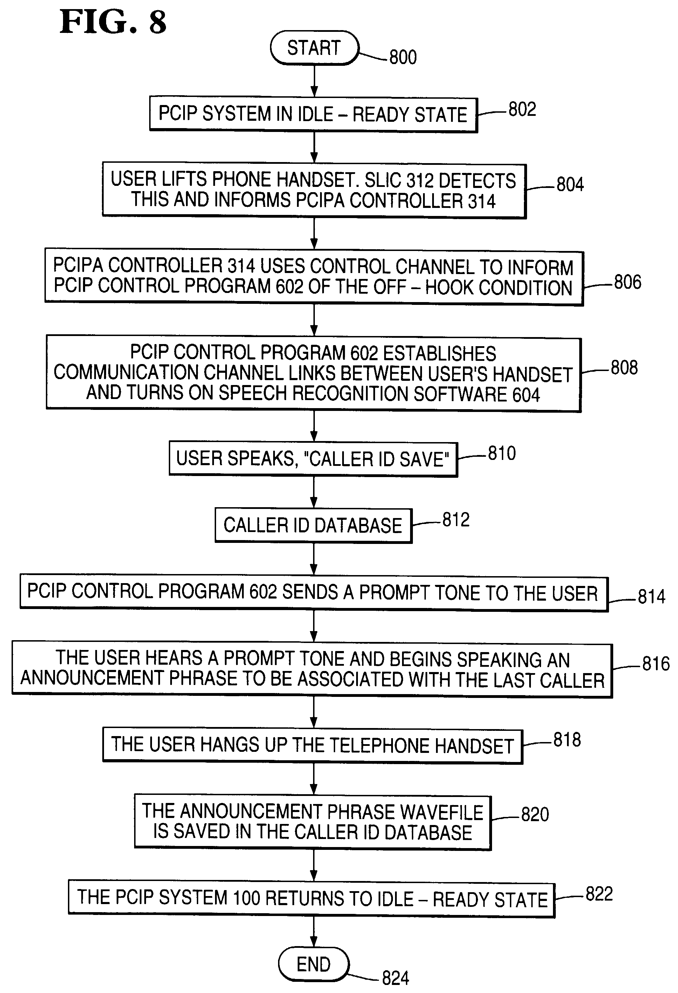

Caller ID database 614 stores a caller's "signature" pattern recovered from the Caller ID information along with an announcement wavefile and call routing options and ring pattern options. The announcement wavefile is pre-recorded by the user (see Caller ID Save Flowchart, Figure 8) and stored in a digital format. The call routing options and ring pattern options are entered via the User Interface software (for this embodiment).

The databases and data in disk storage 506 can be read into memory storage 504, updated in the memory storage 504, and written back to disk storage 506.

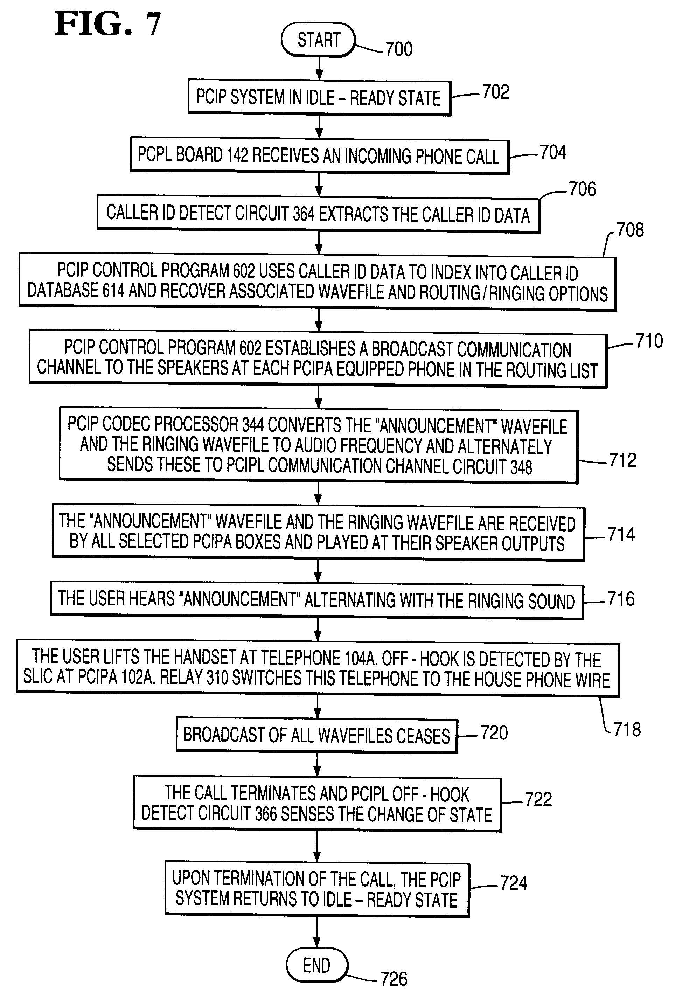

Referring to figure 7, there is shown a flowchart illustrating the steps for performing Caller ID broadcasting operation, in accordance with the present invention. One simple example is provided here to describe one embodiment of the present invention, other variations are possible to the people skilled in the art.

As shown in figure 7, in step 702, PCIP system 100 is initially in an Idle-Ready state, which means: the PC LED 404 on adapter box 202A-N is ON (lighted), indicating that PC 141 is on and connected to adapter 102A; PCIPL board 142 is active; relay 310 on adapter 102A-N is switched to SLIC 312. In this example, it is preferred that relay 310 is initially connected to SLIC 312 for two reasons: (1) for user initiated PCIP features, the user must be able to speak commands to the PC immediately after picking up the handset of telephone 104A without speaking over a dialtone sound; and (2) for incoming call routing purposes, it is preferred that phones do not receive the ringing currents. The user always has the option of over-riding the default setting of relay 310 by pressing line button 410, which will result in a normal dialtone condition.

In step 704, PCIPL board 142 receives an incoming phone call from telephone line 101. Conventionally, the incoming phone call causes wired phones to ring. However, PCIPA equipped phones do not ring because, in each case, relay 310 on each of the adapters (102A, 102B, ... and 102N) is switched to its respective SLIC 312. A mix of traditionally wired phones and PCIPA equipped phones is allowed by the PCIP system. It is preferred that PCIPA equipped phones do not ring immediately because call routing requires that the Caller ID information must first be decoded from telephone line 101 between the first and second ring by telephony convention. After extracting that information, routing can be performed, such that only selected (or all or no) ones of the telephones (104A, 104B, ..., 104N) in the home will be rung.

In step 706, caller ID detect circuit 364 on PCIPL board 142 extracts the Caller ID data that is encoded between the first and second rings. (The user must purchase caller-ID feature from the local phone company to make use of this PCIP capability.) This data is made available in a register that is readable by PC 141. An interrupt is sent to PCIP Control program 602 to initiate a transfer of this data from PCIPL board 142 to PC memory storage 504.

In step 708, PCIP control program 602 uses the Caller ID data to index into Caller ID database 614. In this scenario, three possibilities exist: no entry, entry corresponds to "No-ring", a unique entry exists.

If no entry exists, a default routing is selected, in which PCIP control program 602 routes the ring to all PCIP phones (104A, 104B, ..., 104N). PCIP control program 602 then saves the Caller ID data in a special memory area in memory storage 504, called LastCID. This will be used if a user later decides to use the Caller ID Save feature, which is illustrated in flowchart for Figure 8.

If the entry corresponds to "No-ring", no phones will be rung. This might be a case where the user wants a conventional answering machine or FAX machine to pick up this call. To set up a "No-ring" in an entry, the owner of the PCIP phone system can predetermine which caller should not cause any PCIP phones to ring, see the final step of Figure 8.

Otherwise, if a unique entry exists that corresponds to the Caller ID data, then PCIP control program 602 will retrieve the associated wavefile and distinctive ringing preference and routing information from caller ID database 614. The wavefile consists of a digital representation of an audio clip that was pre-recorded by the user to "announce" the source of the incoming call. The distinctive ringing information selects which of several ringing sound wavefiles will be played at the PCIPA speakers. In an upcoming step, these ringing wavefiles will be played alternating with the Caller ID announcement wavefile. The routing information is a list of which phones in the home will receive the Caller ID announcement and ringing audio. The procedure for making an entry in Caller ID database 614 and adding user preferences will be subsequently described in the Caller ID Save flowchart shown in figure 8.

In step 710, PCIP control program 602 establishes a broadcast communication channel from PCIPL CODEC processor 344 to all the adapters (102A, 102B, ..., and/or 102N) selected by the routing list. To establish this broadcast channel, PCIP control program 602 sends control information to all of the PCIPA controllers at the adapters selected by the routing list, so that, for each selected adapter, a respective communication channel can be established to allow the selected PCIPAs to receive broadcast audio originating from the CODEC 344.

At the detailed level, PCIPL controller 346 forms information data packet for all the PCIPA controllers at the adapters selected by the routing list, to specify which of the two communication channels will carry the audio and which PCIP adapters should route the audio to their respective speakers. Assuming that adapter 102A is selected by the routing list, with the embodiment shown in figure 3A, this packet is sent to PCIPA controller 314, through: PCIPL control channel circuitry 350, PCIPL high frequency interface circuitry 352, house phone wire 101, PCIPA high frequency interface circuitry 320, and PCIPA control channel circuitry 318; with the embodiment shown in figure 3D, this packet is sent to PCIPA controller 314, through: PCIPL control channel circuitry 350, PCIPL wireless transmitter and receiver 398, PCIPA wireless transmitter and receiver 396, and PCIPA control channel circuitry 318.

In step 712, PCIPL CODEC processor 344 converts the Caller ID announcement wavefile and the ringing wavefile to audio frequency and alternately sends them to PCIPL communication channel circuit 348.

In step 714, the Caller ID announcement wavefile and the ringing wavefile are sent from PCIPL board 142 and received by all selected PCIP adapters and played at the respective speakers. Assuming that adapter 102A is selected, with the embodiment shown in figure 3A, these two wavefile are sent to speaker 308, through: PCIPL communication channel circuitry 348, PCIPL high frequency interface circuitry 352, house phone wire 101, PCIPA high frequency interface circuitry 320, PCIPA communication channel circuitry 316, and amplifier 306; with the embodiment shown in figure 3D, these two wavefile are sent to speaker 308, through: PCIPL communication channel circuitry 348, PCIPL wireless transmitter and receiver 398, PCIPA wireless transmitter and receiver 396, PCIPA communication channel circuitry 316, and amplifier 306.

In step 716, the output from the speakers (that are connected to selected adapters) are audible in all the vicinity of every selected PCIPA box that is on the routing list. The user in the vicinity of a selected PCIPA box hears the Caller ID announcement alternating with the ringing sound and can discern who the caller is. If the user chooses, he/she can answer the call.

In step 718, the user lifts the handset at telephone 104A (assuming that the user is in the vicinity of telephone 104A). Off-hook is detected by SLIC 312 at PCIP adapter 102A. PCIPA controller 314 senses the off-hook condition and causes relay 310 to switch telephone 104A to house phone wire 101. PCIPA controller 314 also informs PCIP control program 602 of the off-hook condition via the control channel.

Then, the user can proceed with the telephone call in a normal fashion.

In step 720, PCIP control program 602 causes broadcast of all wavefiles to cease based on either:
1. as in this scenario, a PCIP telephone goes off hook which is detected by the associated SLIC,
2. a non-PCIP telephone goes off hook which is detected by the Off-Hook detect circuit 366 at PCIPL board 142, or
3. no telephone is picked up and eventually the ringing stops which is detected by Ring detect circuit 362 at PCIPL board 142.

In step 722, the call terminates and both parties hang up the phone. PCIPL Off-Hook detect circuit 362 senses the resulting change of impedance on house phone wire 101 and signals this change of state to PCIP control program 602.

In step 724, PCIP Control program 602, being informed of the termination of the call, causes the PCIP System to return to Idle-Ready state.

Referring to figure 8, there is shown a flowchart illustrating steps for performing Caller ID save operation, in accordance with the present invention. This feature provides a quick, convenient mechanism of populating caller ID database 614 with entries by using the telephone and the PCIP capabilities. One entry is made at a time associated with the last caller. The PCIP system always saves the characteristic Caller ID of the last caller into a memory location called, Last Caller ID.

One embodiment of the present invention is offered for populating caller ID database 614, other variations are possible to the people skilled in the art. In particular, a variation using PCIP user interface software 603 allows the user to sit at PC 141 to populate many entries into caller ID database 614 at once and to set a routing table for each of the entries. In this variation, the user is able to manually enter phone number patterns of expected callers and use a microphone to record announcement wavefiles associated with these phone number patterns.

In describing the operation shown in figure 8, it is assumed that a user initiates the operation at telephone set 104A equipped with adapter 102A. The other telephone sets (104B, ..., 104N) can also be used to perform the caller record operation.

In step 802, PCIP system 100 is initially in Idle-Ready State, which means: the PC LED 404 on adapter box 202A is ON (lighted), indicating that PC 141 is on and connected to adapter 102A; PCIPL board 142 is active; relay 310 on adapter 102A is switched to SLIC 312. In this example, it is preferred that relay 310 is initially connected to SLIC 312 because the user must be able to speak commands to the PC immediately after picking up the handset of telephone 104A without speaking over a dialtone sound. Being connected to relay 310, SLIC 312 can provide the capability of determining that the handset of telephone 104A has been lifted, which eventually causes speech recognition software 604 to be initiated on the communication channel. The user always has the option of over-riding the default setting of relay 310 by pressing line button 410, which will result in a normal dialtone condition.

In step 804, to provide an announcement wavefile associated with the last caller, the user lifts the phone handset of telephone 104A. To ensure a proper operational condition, the user looks at panel 329 on adapter box 202A to verify that the PC LED is ON so that the user knows that he/she can communicate verbally with PC 141 for PCIP related features. (On the other hand, if the user did not want to use the PCIP related features, he/she would press line button 410, see line LED 406 coming on, hear a normal dialtone, and dial the number manually). At the PCIP adapter circuit level, when the handset is lifted, SLIC 312 detects Off-hook state and signals this state to controller 314.

In step 806, PCIPA controller 314 forms an information data packet corresponding to this newly generated Off-hook condition and sends it to PCIP controller 346. With the embodiment shown in figure 3A, this packet is sent from PCIPA controller 314 to PCIPL controller 346 through: PCIPA control channel circuitry 318, PCIPA high frequency interface circuitry 320, house phone wire 101, PCIPL high frequency interface circuitry 352, and PCIPL control channel circuitry 350. With the embodiment shown in figure 3D, this packet is sent from PCIPA controller 314 to PCIPL controller 346 through: PCIPA control channel circuitry 318, PCIPA wireless transmitter and receiver 396, PCIPL wireless transmitter and receiver 398, and PCIPL control channel circuitry 350. PCIPL controller 346 alerts PCIP control program 602 on PC 141 of the off-hook change of state.

In step 808, after receiving the information data packet associated with PCIP adapter 102A, PCIP control program 602 communicates with all PCIP adapters (102A, 102B, ..., 102N) using the control channel, to establish a single bi-directional communication channel between PCIP adapter 102A and PCIPL board 142 (other PCIP adapters, e.g. 102B, ..., 102N, in the system, must have their communication channel transmitters turned off in response to this information data packet). PCIP control program 602 invokes speech recognition software 604, which then begins monitoring the communication channel to interpret audio to discern known audio patterns.

In step 810, after picking up the handset of telephone 104A, the user speaks his/her feature request into the handset, for example, " Caller ID Save ". (This example assumes that the prior setup activity happens quickly enough that the user does not need to be prompted). With the embodiment shown in figure 3A, this audio clip is sent to speech recognition software 604 for processing, through: SLIC 312, PCIPA communication channel circuitry 316, PCIPA high frequency circuitry 320, house phone wire 101, PCIPL high frequency interface circuitry 352, PCIPL communication channel circuitry 348, and CODEC Processor 344. With the embodiment shown in figure 3D, this audio clip is sent to speech recognition software 604 for processing, through: SLIC 312, PCIPA communication channel circuitry 316, PCIPA wireless transmitter and receiver 396, PCIPL wireless transmitter and receiver 398, PCIPL communication channel circuitry 348, and CODEC Processor 344.

Specifically, at PCIP adapter circuit level, SLIC 312 converts 2-Wire audio from telephone 104A of "Caller ID Save" to appropriately biased audio and sends the audio to communication channel circuitry 316. Communication channel circuitry 316 converts the analog audio "Caller ID Save" to a high frequency modulated signal and transmits the modulated signal throughout the home on the communication channel which uses house phone wire 101 or wireless carrier.

Communication channel circuitry 348 on PCIPL board 142 recovers "Caller ID Save" spoken command and converts it to analog signal and sends the analog signal to CODEC Processor 344. The CODEC Processor digitizes the analog signal and passes the wavefile to PC 141 over PC system bus (or PC Internal Bus) for speech recognition processing.

In step 812, after receiving the wavefile, "Caller ID Save", speech recognition software 604 on PC 141 uses algorithms to recognize the speech. In this case, speech recognition software looks in SR Vocabulary database 612 and recognizes the command "Caller ID Save" as a feature invocation. PCIP control program 602 makes an entry in Caller ID database 614 and inserts the contents of the "Last Caller ID" memory location as one part of that entry. PCIP control program 602 then waits for the user to provide the announcement wavefile to complete this entry.

In step 814, a prompt tone is sent to the handset of telephone 104A to prompt the user to speak the announcement phrase associated with the last Caller ID. To send the prompt tone, PCIP control program 602 causes CODEC Processor 344 on PCIPL board 142 to generate the distinctive audio tone. With the embodiment shown in figure 3A, this tone is sent to the handset of telephone 104A, through: PCIPL communication channel circuitry 348, PCIPL high frequency interface circuitry 352, house phone wire 101, PCIPA high frequency interface circuitry 320, PCIPA communication channel circuitry 316, and SLIC 312. With the embodiment shown in figure 3D, this tone is sent to the handset of telephone 104A, through: PCIPL communication channel circuitry 348, PCIPL wireless transmitter and receiver 398, PCIPA wireless transmitter and receiver 398, PCIPA communication channel circuitry 316, and SLIC 312.

In step 816, after the user hears the prompt tone, the user begins speaking an announcement phrase to be associated with the last caller. For example, depending on the last caller the user might speak, "Susan Jones", or "ACME Lawn Service", or "out of area call". This phrase is transmitted to the PC via the communication channel in a similar manner as was the command, "Caller ID Save".

In step 818, the user replaces the handset of telephone 104A. SLIC 312 detects and reports the on-hook condition just as it did the off-hook condition.

In step 820, upon receiving the on-hook signal, control of PCIP control program 602 stores the phrase, which has been digitally encoded into a wavefile by CODEC processor 344, in Caller ID database 614 along with the Last Caller ID. In the future, when the caller having this caller ID pattern calls again, this wavefile will be retrieved and played at the selected PCIPA boxes to announce who the caller is.

In step 822, the PCIP system 100 returns to Idle-Ready state.

In some later time, the user may invoke PCIP user interface program 603 to enter routing and ringing preferences. Alternatively, the user may simply use the defaults, which would typically mean, for a particular Caller ID ring all PCIP-equipped phones with a normal sounding ringing pattern alternating with the Caller ID announcement. If the user chooses to change this default, he/she would sit at the PC monitor/keyboard/mouse human interface and invoke the PCIP user interface program 603. The user would typically point-and-click on the Caller ID database entry to change, then point-and-click on which phones to route the broadcast to, and then point-and-click on which ringing pattern to play.

It should be noted that the embodiments in the present invention are described in a home setting, they can be readily used in other settings within the scope of the present invention, such as a small office setting for example.

## Claims

1. Apparatus for responding to a caller identification carried in an incoming call to a communication device characterised in that the apparatus comprises a processor logic (602) capable of associating a message (614) with the identification and an audio generating arrangement capable of responding (344) to said message and audibly presenting (306) said message.

2. An apparatus according to Claim 1 characterised in that the apparatus comprises:
(a) a controller (142), including:
(1) a detector circuit (364) capable of detecting the caller identification carried in the incoming call;
(2) said processor logic (602) capable of associating a message (614) with the caller identification;
(3) a transmitter circuit (348) capable of sending said message to the communication device; and
(b) an interface circuit (102A....102N),coupled to the communication device (104A....104N), including:
(1) a receiver circuit (316) capable of receiving the message; and
(2) said audio generating device (306) capable of audibly presenting the message.

3. Apparatus according to Claim 1 or Claim 2 characterised in that the apparatus comprises an audio message forming device (344) responsive to said associated message stored as a wavefile.

4. Apparatus according to any one of the preceding claims characterised in that communication signals are transmitted to said communication device via a communication line (101).

5. Apparatus according to any one of the preceding claims characterised in that said controller (142) and interface circuit (102A.....102N) are coupled to said communication line(101) .

6. Apparatus according to Claim 4 or Claim 5 characterised in that said message is sent from said controller (142) to said interface circuit via said communication line (101) without interfering with said communication signals.

7. Apparatus according to Claim 2 or any Claim dependent thereon characterised in that said message is wirelessly (396-399) sent from said controller to said interface circuit.

8. A system for presenting a caller identification carried in an incoming call to a plurality of communication devices (104A.....104N), characterised in that the identification is an audible message and in that a unique device identification is assigned to each of the communication devices, the system comprising:
(a) a controller, including:
(1) a detector circuit (364) capable of detecting the caller identification;
(2) a processor logic (602), capable of associating a message (614) with the caller identification and capable of generating a device identification associated with a particular one of the communication devices;
(3) a transmitter circuit (348) capable of sending the message and said device identification to the communication devices;
and
(b) a plurality of interface circuits (102A....102N), with each of said interface circuits being coupled to a respective communication device, a representative one of said interface circuits including:
(1) a receiver circuit (316) capable of receiving said message and device identification;
(2) a processor logic (314) capable of determining whether said received device identification matches the device identification assigned to the communication device coupled to the representative interface circuit; and
(3) an audio generating device (306) capable of audibly presenting the message if said received device identification matches the device identification assigned to the communication device coupled to the representative interface circuit.

9. An apparatus for caller identification characterised in that there is a database (506) to store messages (614) for caller identifications carried in prospective incoming calls in response to oral instruction from a communication device and comprising:
(a) an interface circuit (102A.....102N) coupled to the communication device, (104A.....104N) including:
(1) means for generating a caller identification and a message associated with said caller identification in response to the oral instruction from the communication device; and
(2) a transmitter circuit (316) capable of sending said caller identification and associated message;
and
(b) a controller, including:
(1) a receiver circuit (348) capable of receiving said caller identification and associated message; and
(2) a processor logic (348) capable of storing said caller identification and associated message into the database.

10. An apparatus for caller identification characterised by generating a message for a caller identification carried in an incoming call, and for sending the message to a communication device, a unique device identification being assigned to the communication device, the apparatus comprising:
a detector circuit (364) to detect the caller identification carried in the incoming call;
a processor logic (602) to select a message for the caller identification and to generate a device identification associated with the communication device; and
a transmitter circuit (348) to send said selected message, together with said device identification, to the communication device.

11. An apparatus for caller identification from identification carried in an incoming call characterised by audibly presenting a message to a communication device when coupled thereto, a unique device identification being assigned to the communication device, the apparatus comprising:
a receiver circuit capable of receiving a message containing a device identification;
a processor logic (314) capable of determining whether said received device identification matches the device identification assigned to the communication device; and
an audio generator circuit capable of audibly presenting the message if said received device identification matches the device identification assigned to the communication device.

12. In use with an apparatus for a caller identification from information carried in an incoming call characterised by generating a message (614) for a said caller identification carried in an incoming call, and for sending the message to a communication device (104A.....104N), a unique device identification being assigned to the communication device, a method comprising the steps of:
detecting the caller identification carried in the incoming call;
selecting (602) a message for the caller identification and generating a device identification associated with the communication device; and
sending said selected message, together said device identification, to the communication device.

13. In use with an apparatus, coupled to a communication device, for caller identification from information in an incoming call characterised by audibly presenting a message for said caller identification to the communication device (104A.....104N), a unique device identification being assigned to the communication device, the method comprising the steps of:
receiving a message containing a device identification;
determining whether said received device identification matches the device identification assigned to the communication device; and
audibly presenting (306) the message (614) if said received device identification matches the device identification assigned to the communication device.
